# EUROPEAN PATENT APPLICATION

(11) **EP 4 539 581 A1**
(43) Date of publication of application: **16.04.2025**
(21) Application number: 22946119.9
(22) Date of filing: 13.06.2022
(51) Int. Cl.: H04W 74/08, H04W 88/04

(54) **ACCESS CONTROL METHOD AND APPARATUS**

(71) Applicant: Beijing Xiaomi Mobile Software Co., Ltd., Beijing 100085 (CN)
(72) Inventor: YANG, Xing, Beijing 100085 (CN)
(74) Representative: Stöckeler, Ferdinand
(86) International application number: PCT/CN2022/098481
(87) International publication number: WO 2023/240419

(57) **Abstract**

Disclosed in embodiments of the present disclosure is an access control method, which can be applied to the technical field of communications. The method executed by a remote terminal device comprises: in response to the remote terminal device performing relay selection during the operation of an access barring timer, determining the satisfaction situation of a specified condition; and controlling the operation state of the access barring timer according to the satisfaction situation of the specified condition. Thus, the remote terminal device can reasonably stop the access barring timer and perform random access, thereby ensuring the communication reliability of the remote terminal device.

## Description

### TECHNICAL FIELD

The disclosure relates to a field of communication technologies, in particular to an access control method and a communication apparatus.

### BACKGROUND

In a communication system, if a terminal device performs a cell reselection or a cell selection during running of an access barring timer, the access barring timer may be stopped. For a remote terminal device, if the remote terminal device performs a relay selection during running of the access barring timer, how to control a running state of the access barring timer is a problem that needs to be solved currently.

### SUMMARY

Embodiments of the disclosure provide an access control method and a communication apparatus.

According to a first aspect of embodiments of the disclosure, an access control method is provided. The method is performed by a remote terminal device, and includes:
in response to the remote terminal device performing a relay selection during running of an access barring timer, determining a satisfaction situation of a specified condition; and controlling a running state of the access barring timer according to the satisfaction situation of the specified condition.

In the disclosure, if the remote terminal device performs the relay selection during running of the access barring timer, the remote terminal device first determines the satisfaction situation of the specified condition, and then controls the running state of the access barring timer according to the satisfaction situation of the specified condition, which thus realizes a reliable control on the random access of the remote terminal device. Therefore, the remote terminal device can reasonably stop the access barring timer and perform the random access, which ensures a communication reliability of the remote terminal device.

According to a second aspect of embodiments of the disclosure, a communication apparatus is provided. The communication apparatus is applied to a remote terminal device, and includes:
a processing module, configured to, in response to the remote terminal device performing a relay selection during running of an access barring timer, determine a satisfaction situation of a specified condition, and control a running state of the access barring timer according to the satisfaction situation of the specified condition.

In the disclosure, if the remote terminal device performs the relay selection during running of the access barring timer, the remote terminal device first determines the satisfaction situation of the specified condition, and then controls the running state of the access barring timer according to the satisfaction situation of the specified condition, which thus realizes a reliable control on the random access of the remote terminal device. Therefore, the remote terminal device can reasonably stop the access barring timer and perform the random access, which ensures a communication reliability of the remote terminal device.

According to a third aspect of embodiments of the disclosure, a communication apparatus is provided. The communication apparatus includes a processor and a memory. The memory stores a computer program. When the processor executes the computer program stored in the memory, the communication apparatus is caused to implement the method described in the first aspect.

According to a fourth aspect of embodiments of the disclosure, a communication apparatus is provided. The communication apparatus includes a processor and an interface circuit. The interface circuit is configured to receive code instructions and transmit the code instructions to the processor, and the processor is configured to run the code instructions to cause the device to implement the method described in the first aspect.

According to a fifth aspect of embodiments of the disclosure, a transmission system of a failure information is provided. The system includes the communication apparatus described in the third aspect or the communication apparatus described in the fourth aspect.

According to a sixth aspect of embodiments of the disclosure, a computer-readable storage medium for storing instructions for the terminal device is provided. When the instructions are executed, the terminal device is caused to implement the method described in the first aspect.

According to a seventh aspect of embodiments of the disclosure, a computer program product including computer programs is provided. When the computer programs are running on a computer, the computer is caused to implement the method described in the first aspect.

According to an eighth aspect of embodiments of the disclosure, a chip system is provided. The chip system includes at least one processor and an interface, and the chip system is configured for supporting the terminal device in realizing the functions involved in the first aspect, e.g., determining or processing at least one of data or information involved in the method described above. In a possible design, the chip system further includes a memory. The memory is configured to store necessary computer programs and data of the terminal device. The chip system may consist of chips or may include a chip and other discrete devices.

According to a ninth aspect of embodiments of the disclosure, a computer program is provided. When the computer program is running on a computer, the computer is caused to implement the method described in the first aspect.

### BRIEF DESCRIPTION OF THE DRAWINGS

In order to clearly illustrate technical solutions of embodiments of the disclosure or background technologies, a description of drawings used in the embodiments or the background technologies is given below.
FIG. 1 is a schematic diagram of a communication system according to an embodiment of the disclosure.
FIG. 2 is a flowchart of an access control method according to an embodiment of the disclosure.
FIG. 3 is a flowchart of another access control method according to an embodiment of the disclosure.
FIG. 4 is a flowchart of yet another access control method according to an embodiment of the disclosure.
FIG. 5 is a flowchart of a further access control method according to an embodiment of the disclosure.
FIG. 6 is a schematic diagram of a communication apparatus according to an embodiment of the disclosure.
FIG. 7 is a schematic diagram of another communication apparatus according to an embodiment of the disclosure.
FIG. 8 is a structural diagram of a chip according to an embodiment of the disclosure.

### DETAILED DESCRIPTION

For ease of understanding, the terms involved in this disclosure are introduced at first.

### 1. Remote terminal device

A terminal device may not be directly connected to a network device, but may communicate with the network device through a relay of another device. For example, the terminal device can communicate with the network device through another terminal device. The terminal device that is not connected to the network device is called the remote terminal device, and the terminal device that provides a relay function is called a relay terminal device. The remote terminal device communicates with the relay terminal device via a sidelink unicast.

### 2. Unified Access Control (UAC)

When the terminal device has a new access request, the terminal device needs to perform an UAC inspection. The inspection method is to select an access probability according to an access category and an access identity corresponding to this access request service. A random number between 0 and 1 is generated. If the random number is less than the access probability, the inspection is passed and an access attempt can be initiated. If the random number is greater than the access probability, the inspection is failed, the terminal device starts an access barring timer, such as T390, to bar the access during an operation of the access barring timer.

If the terminal device performs a cell reselection or a cell selection during running of an access barring timer, the access barring timer may be stopped.

In order to better understand an access control method disclosed by embodiments of the disclosure, a communication system to which the embodiments of the disclosure apply will be described below.

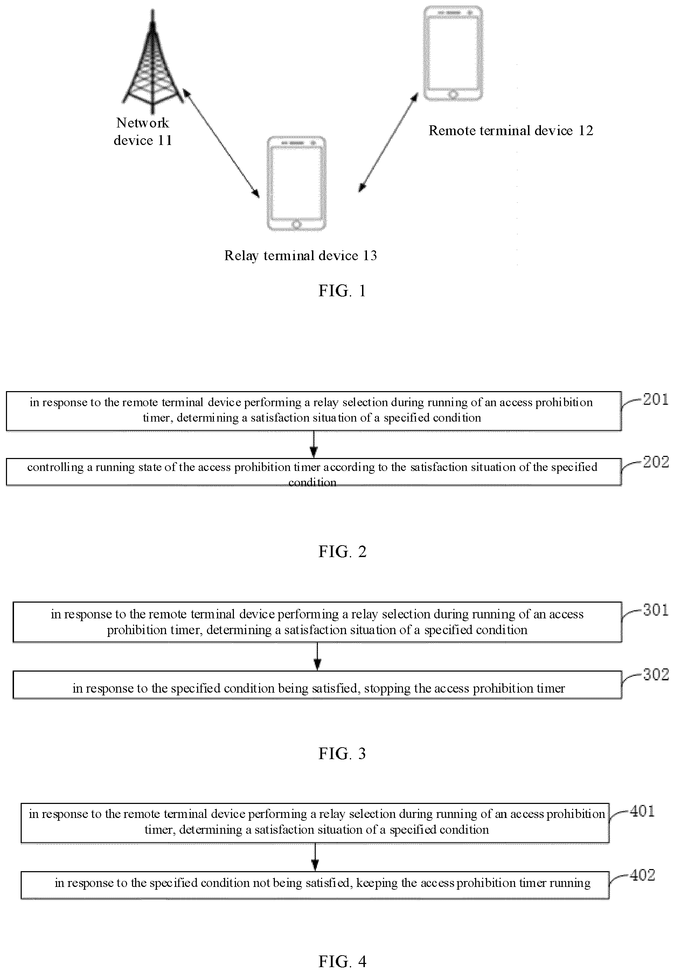

As illustrated in FIG. 1, FIG. 1 is a structural diagram of a communication system according to an embodiment of the disclosure. The communication system may include, but is not limited to, a network device and a terminal device. The number and the form of devices illustrated in FIG. 1 are only for examples and do not constitute a limitation on the embodiments of the disclosure, and two or more network devices and two or more terminal devices may be included in practical applications. The communication system illustrated in FIG. 1 includes, for example, a network device 11, a remote terminal device 12 and a relay terminal device 13.

It is noteworthy that the technical solutions of the embodiments of the disclosure can be applied to various communication systems, such as, a long term evolution (LTE) system, a 5th generation (5G) mobile communication system, a 5G new radio (NR) system, or other future new mobile communication systems.

The network device 11 in the embodiments of the disclosure is an entity, on a network side, for transmitting or receiving signals. For example, the network device 11 may be an evolved NodeB (eNB), a transmission reception point (TRP), a next generation NodeB (gNB) in the NR system, a base station in other future mobile communication systems, or an access node in a wireless fidelity (WiFi) system. The specific technology and specific device form adopted by the network device are not limited in the embodiments of the disclosure. The network device provided in the embodiments of the disclosure may be composed of a central unit (CU) and a distributed unit (DU). The CU may also be called a control unit. The use of CU-DU structure allows to divide a protocol layer of the network device (such as a base station), such that some of functions of the protocol layer are placed in the CU for a centralized control, and some or all of the remaining functions of the protocol layer are distributed in the DU, and the DU is centrally controlled by the CU.

The remote terminal device 12 and the relay terminal device 13 in the embodiments of the disclosure are entities on a user side for receiving or transmitting signals, such as a cellular phone. The terminal device may also be referred to as a terminal, a user equipment (UE), a mobile station (MS), a mobile terminal (MT), and the like. The terminal device can be a car with communication functions, a smart car, a mobile phone, a wearable device, a Pad, a computer with wireless transceiver functions, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, a wireless terminal device in smart home, etc. The specific technology and specific device form adopted by the terminal device are not limited in the embodiments of the disclosure.

It is understandable that the communication system described in the embodiments of the disclosure is intended to clearly illustrate the technical solutions according to the embodiments of the disclosure, and does not constitute a limitation on the technical solutions provided by the embodiments of the disclosure. It is understandable by those skilled in the art that as system architectures evolve and new service scenarios emerge, the technical solutions according to the embodiments of the disclosure are also applicable to similar technical problems.

Generally, a relay selection performed by the remote terminal device may be triggered by the following two situations.
1. The remote terminal device, which is a terminal device in a non-connected state, moves from a coverage of a cell to a coverage of the relay terminal device. The non-connected state includes an idle state (RRC_IDLE) and an inactive state (RRC_INACTIVE).
2. The remote terminal device leaves a connected state (RRC_CONNECTED). For example, a radio link is failed, a handover is failed, or a higher-layer notifies, etc.

In the disclosure, in order to solve the problem of how to control a running state of the access barring timer when the remote terminal device performs the relay selection during running of the access barring timer, an access control method is proposed, so that when the remote terminal device triggers the relay selection, the access barring timer can be stopped reasonably to ensure that the remote terminal device can access reliably.

It should be noted that in this disclosure, an access control method provided by any embodiment can be performed alone, or in combination with possible implementation methods in other embodiments, or in combination with any technical solution in the related art.

An access control method and an apparatus provided by the disclosure will be introduced in detail with the attached drawings.

FIG. 2 is a flowchart of an access control method according to an embodiment of the disclosure. The method is performed by a remote terminal device. As illustrated in FIG. 2, the method includes but is not limited to the following steps.

At step 201, in response to the remote terminal device performing a relay selection during running of an access barring timer, a satisfaction situation of a specified condition is determined.

Optionally, the specified condition may be a condition where a trigger event of the relay selection is a specified event, or a condition where a serving cell of the remote terminal device changes.

Optionally, the trigger event of the relay selection may be an event where the remote terminal device moves from a coverage of a cell to a coverage of a relay terminal device, or an event where the remote terminal device leaves a connected state, for example, a handover of the remote terminal device is failed, or a radio link is failed.

Optionally, the remote terminal device performs the relay selection, which may refer to that the remote terminal device moves from the coverage of the cell to the coverage of the relay terminal device, thus the remote terminal device performs the relay selection.

Alternatively, the remote terminal device performs the relay selection, which may refer to that the remote terminal device performs a relay reselection. For example, when a radio link failure, a handover failure, a cell reselection failure or a radio resource control (RRC) connection failure occurs on the relay terminal device, the relay terminal device sends a notification message (Notification MessageSidelink) to the remote terminal device, to which the relay terminal device is connected, through a sidelink. After receiving the notification message, the remote terminal device may perform the relay reselection if the remote terminal device is in an idle state or an inactive state.

At step 202, a running state of the access barring timer is controlled according to the satisfaction situation of the specified condition.

In this disclosure, if the remote terminal device performs the relay selection during running of the access barring timer, the satisfaction situation of the specified condition may be first determined, and then whether the access barring timer can be stopped may be determined according to the satisfaction situation of the specified condition.

Optionally, the remote terminal device may determines whether to stop the access barring timer according to a specified condition, where whether a trigger event of the relay selection is a specified event, or according to a specified condition, where whether a serving cell of the remote terminal device changes.

That is, if the remote terminal device performs the relay selection during running of the access barring timer, the remote terminal device may stop the access barring timer according to the satisfaction situation of the specified condition and then perform a random access, or may keep the access barring timer running.

In the disclosure, if the remote terminal device performs the relay selection during running of the access barring timer, the remote terminal device first determines the satisfaction situation of the specified condition, and then controls the running state of the access barring timer according to the satisfaction situation of the specified condition, which thus realizes a reliable control on the random access of the remote terminal device. Therefore, the remote terminal device can reasonably stop the access barring timer and perform the random access, which ensures a communication reliability of the remote terminal device.

FIG. 3 is a flowchart of another access control method according to an embodiment of the disclosure. The method is performed by a remote terminal device. As illustrated in FIG. 3, the method includes but is not limited to the following steps.

At step 301, in response to the remote terminal device performing a relay selection during running of an access barring timer, a satisfaction situation of a specified condition is determined.

The specific implementation of step 301 can be referred to the detailed description of any embodiment of the disclosure, which is not repeated here.

At step 302, in response to the specified condition being satisfied, the access barring timer is stopped.

Optionally, the specified condition may include at least one of: a condition where a trigger event of the relay selection is a specified event, or a condition where a serving cell of the remote terminal device changes.

For example, the specified condition is the condition where the trigger event of the relay selection is a specified event. If the remote terminal device triggers the relay selection during running of the access barring timer, whether the trigger event of the relay selection is the specified event may be determined. If the trigger event of the relay selection is the specified event, the specified condition may be determined to be satisfied, and the access barring timer may be then stopped for performing a random access.

Optionally, the specified event may be any one or more of: leaving a connected state, radio link failure, cell handover failure, receiving an RRC release message, and higher-layer notification.

The higher-layer notification can be a notification from an application layer of the remote terminal device. For example, the application layer informs the remote terminal device to perform the relay selection or the relay reselection.

Alternatively, after performing the relay selection during running of the access barring timer, the remote terminal device first determines a current serving cell where the remote terminal device is located in, and then judges that if the current serving cell is the same as a serving cell before the relay selection. If the current serving cell and the serving cell before the relay selection are different, it means that the serving cell has changed, i.e., the specified condition is satisfied, and the remote terminal device can stop the access barring timer and perform the random access.

Optionally, after performing the relay selection during running of the access barring timer, the remote terminal device may first determine whether the trigger event of the relay selection satisfies a specified condition. If the specified condition is satisfied, the access barring timer is stopped. If the specified condition is not satisfied, whether the serving cell, where the remote terminal device is located in, changes is then determined, and if the serving cell changes, the access barring timer is stopped.

Alternatively, after performing the relay selection during running of the access barring timer, the remote terminal device may first determine whether the serving cell changes. If the serving cell changes, the access barring timer is stopped. If the serving cell not changes, whether the trigger event of the relay selection satisfies a specified condition is then determined, and if the specified condition is satisfied, the access barring timer is stopped. The specific process is not limited in the disclosure.

In this disclosure, if the remote terminal device performs the relay selection during running of the access barring timer, and the trigger event of the relay selection is the specified event, or, the serving cell of the remote terminal device changes, the access barring timer can be stopped for performing the random access. Therefore, the remote terminal device can reasonably stop the access barring timer and perform the random access, thereby ensuring the communication reliability of the remote terminal device.

FIG. 4 is a flowchart of yet another access control method provided by an embodiment of the disclosure. The method is performed by a remote terminal device. As illustrated in FIG. 4, the method includes but is not limited to the following steps.

At step 401, in response to the remote terminal device performing a relay selection during running of an access barring timer, a satisfaction situation of a specified condition is determined.

The specific implementation of step 401 can be referred to the detailed description of any embodiment of the disclosure, which is not repeated here.

At step 402, in response to the specified condition not being satisfied, the access barring timer is kept running.

Optionally, the specified condition may include at least one of: a condition where a trigger event of the relay selection is a specified event, or a condition where a serving cell of the remote terminal device changes.

For example, the specified condition is the condition where the trigger event of the relay selection is a specified event. If the remote terminal device triggers the relay selection during running of the access barring timer, whether the trigger event of the relay selection is the specified event may be determined. It the trigger event of the relay selection is not the specified event, it may determines that the specified condition is not satisfied, and the access barring timer may be kept running.

Optionally, the specified event may be any one or more of: leaving a connected state, radio link failure, cell handover failure, receiving an RRC release message, and higher-layer notification.

The higher-layer notification can be a notification from an application layer of the remote terminal device. For example, the application layer informs the remote terminal device to perform the relay selection or the relay reselection.

Alternatively, after performing the relay selection during running of the access barring timer, the remote terminal device first determines a current serving cell where the remote terminal device is located in, and then judges that if the current serving cell is the same as a serving cell before the relay selection. If the current serving cell is the same as the serving cell before the relay selection, it means that the serving cell has not changed, i.e., the specified condition is not satisfied, the remote terminal device keeps the access barring timer running and does not perform the random access.

Optionally, after performing the relay selection during running of the access barring timer, the remote terminal device may first determine whether the trigger event of the relay selection satisfies a specified condition. If the specified condition is not satisfied, it further determines whether the serving cell, where the remote terminal device is located in, changes, and if the serving cell does not change, the access barring timer is kept running.

Alternatively, after performing the relay selection during running of the access barring timer, the remote terminal device may first determine whether the serving cell changes. If the serving cell does not change, whether the trigger event of the relay selection satisfies a specified condition is then determined, and if the specified condition is not satisfied, the access barring timer is kept running. The specific process is not limited in the disclosure.

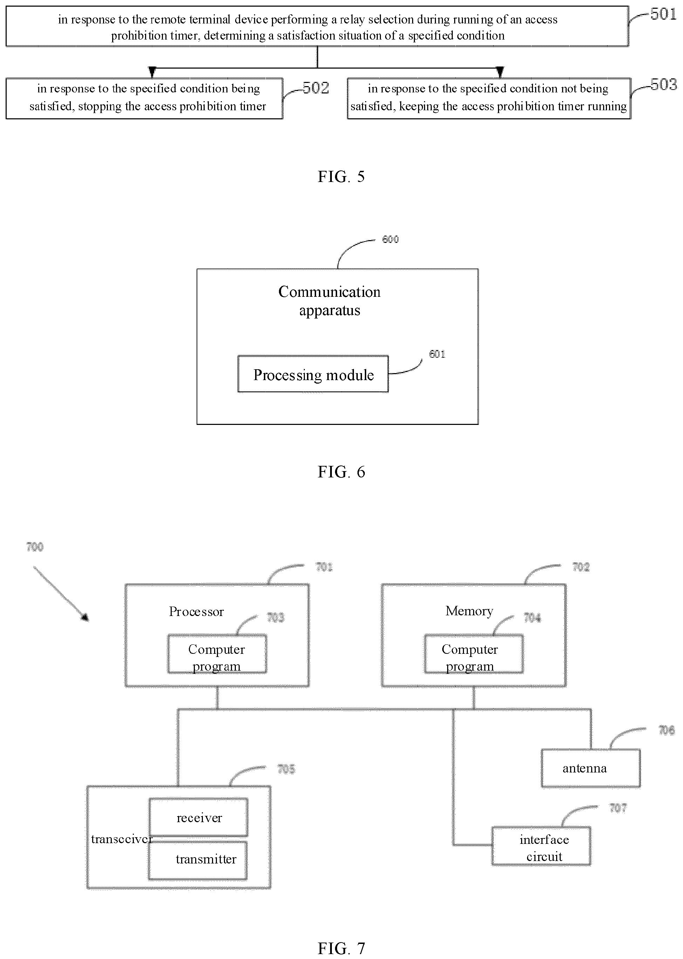

In this disclosure, if the remote terminal device performs the relay selection during running of the access barring timer, and the trigger event of the relay selection is not the specified event, or, the serving cell of the remote terminal device does not changes, the access barring timer may be kept running to prevent the remote terminal device from performing the random access. Therefore, the remote terminal device can reasonably control the operation of the access barring timer, so as to reliably control the random access, thereby ensuring the communication reliability of the remote terminal device. FIG. 5 is a flowchart of a further access control method according to an embodiment of the disclosure. The method is performed by a remote terminal device. As illustrated in FIG. 5, the method includes but is not limited to the following steps.

At step 501, in response to the remote terminal device performing a relay selection during running of an access barring timer, a satisfaction situation of a specified condition is determined.

At step 502, in response to the specified condition being satisfied, the access barring timer is stopped.

The specific implementations of steps 501 and 502 can be referred to the detailed description of any embodiment of the disclosure, which is not repeated here.

At step 503, in response to the specified condition not being satisfied, the access barring timer is kept running.

Optionally, the remote terminal device performs the relay selection, which may mean that the remote terminal device moves from a coverage of a cell to a coverage of a relay terminal device and thus performs the relay selection, or mean that the remote terminal device performs a relay reselection.

Optionally, the specified condition may include at least one of: a condition where a trigger event of the relay selection is a specified event, or a condition where a serving cell of the remote terminal device changes.

For example, the specified condition is the condition where the trigger event of relay selection is a specified event. If the remote terminal device triggers the relay selection during running of the access barring timer, whether the trigger event of the relay selection is the specified event may be determined. If the trigger event of the relay selection is the specified event, the access barring timer may be stopped for performing a random access. If the trigger event of the relay selection is not the specified event, the access barring timer may be kept running, and the random access is not performed.

Optionally, the specified event may be any one or more of: leaving a connected state, radio link failure, cell handover failure, receiving an RRC release message, and higher-layer notification.

The higher-layer notification can be a notification from an application layer of the remote terminal device. For example, the application layer informs the remote terminal device to perform the relay selection or the relay reselection.

Alternatively, the specified condition is the condition where the serving cell of the remote terminal device changes. If the remote terminal device performs a cell selection during running of the access barring timer, and the serving cell of the remote terminal device does not change, the access barring timer may be kept running, that is, the random access is not performed. If the serving cell has changed, the remote terminal device may stop the access barring timer for performing the random access.

Optionally, after performing the relay selection during running of the access barring timer, the remote terminal device may first determine whether the trigger event of the relay selection satisfies a specified condition. If the specified condition is satisfied, the access barring timer is stopped. If the specified condition is not satisfied, whether the serving cell, where the remote terminal device is located in, changes is then determined. If the serving cell changes, the access barring timer is stopped. If the serving cell does not change, the access barring timer is kept running.

Alternatively, after performing the relay selection during running of the access barring timer, the remote terminal device may first determine whether the serving cell changes. If the serving cell changes, the access barring timer is stopped. If the serving cell does not change, whether the trigger event of the relay selection satisfies a specified condition is then determined, and if the specified condition is satisfied, the access barring timer is stopped, and if the specified condition is not satisfied, the access barring timer is kept running, the process is not limited in the disclosure.

In this disclosure, if the remote terminal device performs the relay selection during running of the access barring timer, the remote terminal device may determine whether the specified condition is satisfied. If the specified condition is satisfied, the access barring timer may be stopped, otherwise, the access barring timer running is kept running. Therefore, the remote terminal device can reasonably control the access barring timer to stop or run, so that the remote terminal device can reasonably perform the random access, thereby ensuring the communication reliability of the remote terminal device.

FIG. 6 is a schematic diagram of a communication apparatus 600 provided by an embodiment of the disclosure. The communication apparatus 600 shown in FIG. 6 includes a processing module 601.

It is understood that the communication apparatus 600 may be a remote terminal device, an apparatus in the remote terminal device, or an apparatus that can be used together with the remote terminal device.

Optionally, the communication apparatus 600 is provided on a remote terminal device side, in which:
the processing module 601 is configured to, in response to the remote terminal device performing a relay selection during running of an access barring timer, determine a satisfaction situation of a specified condition.

The processing module 601 is also configured to control a running state of the access barring timer according to the satisfaction situation of the specified condition.

Optionally, the processing module 601 is configured to:
in response to the specified condition being satisfied, stop the access barring timer; or,
in response to the specified condition not being satisfied, keep the access barring timer running.

Optionally, the specified condition includes at least one of: a condition where a trigger event of the relay selection is a specified event, or a condition where a serving cell of the remote terminal device changes.

Optionally, the specified event may be any one or more of:
leaving a connected state, radio link failure, cell handover failure, receiving an RRC release message, and higher-layer notification.

Optionally, the relay selection includes a relay reselection.

In the disclosure, if the remote terminal device performs the relay selection during running of the access barring timer, the remote terminal device first determines the satisfaction situation of the specified condition, and then controls the running state of the access barring timer according to the satisfaction situation of the specified condition, which thus realizes a reliable control on the random access of the remote terminal device. Therefore, the remote terminal device can reasonably stop the access barring timer and perform the random access, which ensures a communication reliability of the remote terminal device.

As illustrated in FIG. 7, FIG. 7 is a schematic diagram of another communication apparatus 700 provided by an embodiment of the disclosure. The communication apparatus 700 may be a terminal device, a network device, or a chip, a chip system or a processor that supports the terminal device to realize the above-described methods, or a chip, a chip system or a processor that supports the network device to realize the above-described methods. The apparatus may be configured to realize the methods described in the above method embodiments with reference to the description of the above-described method embodiments.

The communication apparatus 700 may include one or more processors 701. The processor 701 may be a general purpose processor or a dedicated processor, such as, a baseband processor or a central processor. The baseband processor is configured for processing communication protocols and communication data. The central processor is configured for controlling the communication apparatus (e.g., base station, baseband chip, terminal device, terminal device chip, DU, or CU), executing computer programs, and processing data of the computer programs.

Optionally, the communication apparatus 700 may include one or more memories 702 on which a computer program 704 may be stored. The processor 701 executes the computer program 704 to cause the communication apparatus 700 to perform the methods described in the above method embodiments. Optionally, data may also be stored in the memory 702. The communication apparatus 700 and the memory 702 may be provided separately or may be integrated together.

Optionally, the communication apparatus 700 may also include a transceiver 705 and an antenna 706. The transceiver 705 may be referred to as a transceiver unit, a transceiver machine, or a transceiver circuit, for realizing the transceiver function. The transceiver 705 may include a receiver and a transmitter. The receiver may be referred to as a receiver machine or a receiving circuit, for realizing the receiving function. The transmitter may be referred to as a transmitter machine or a transmitting circuit, for realizing the transmitting function.

Optionally, the communication apparatus 700 may also include one or more interface circuits 707. The interface circuits 707 are used to receive code instructions and transmit them to the processor 701. The processor 701 runs the code instructions to cause the communication apparatus 700 to perform the method described in the method embodiments.

If the communication apparatus 700 is a remote terminal device, the processor 701 is configured to execute step 201 in FIG. 2, or step 301 in FIG. 3.

In an implementation, the processor 701 may include a transceiver for implementing the receiving and transmitting functions. The transceiver may be, for example, a transceiver circuit, an interface, or an interface circuit. The transceiver circuit, interface, or interface circuit for implementing the receiving and transmitting functions may be separated or may be integrated together. The transceiver circuit, interface, or interface circuit described above may be used for code/data reading and writing, or may be used for signal transmission or delivery.

In an implementation, the processor 701 stores the computer program 703. When the processor 701 runs the computer program 703, the communication apparatus 700 is caused to execute the method described in the above method embodiments. The computer program 703 may be solidified in the processor 701, in which case, the processor 701 may be implemented by hardware.

In an implementation, the communication apparatus 700 may include circuits. The circuits may implement the sending, receiving or communicating function in the preceding method embodiments. The processor and transceiver described in this disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and transceiver may also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication apparatus in the above description of embodiments may be a remote terminal device, but the scope of the communication apparatus described in the disclosure is not limited thereto, and the structure of the communication apparatus is not limited by FIG. 7. The communication apparatus may be a stand-alone device or may be part of a larger device. For example, the described communication apparatus may be:
(1) a stand-alone IC, chip, chip system or subsystem;
(2) a collection of ICs including one or more ICs, optionally, the collection of ICs may also include storage components for storing data and computer programs;
(3) an ASIC, such as a modem;
(4) a module that may be embedded within other devices;
(5) a receiver, a terminal device, a smart terminal device, a cellular phone, a wireless device, a handheld machine, a mobile unit, an in-vehicle device, a network device, a cloud device, an artificial intelligence device, and the like; and
(6) others.

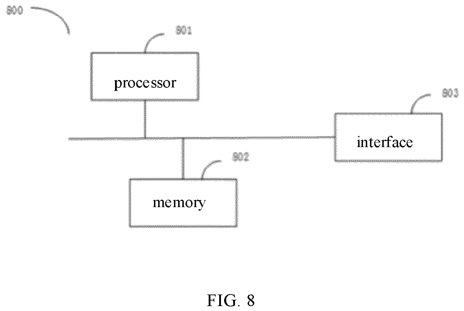

The case where the communication apparatus may be a chip or a chip system may be referred to the schematic diagram of a chip shown in FIG. 8. In FIG. 8, the chip 800 includes a processor 801 and an interface 803. There may be one or more processors 801, and there may be a plurality of interfaces 803.

If the chip is configured to realize the function of the remote terminal device in the embodiments of the disclosure,
the processor 801 is configured to execute step 201 in FIG. 2, or step 301 in FIG. 3.

Optionally, the chip further includes a memory 802 for storing necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer programs on the computer, all or part of processes or functions described in the embodiments of the disclosure can be implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or wirelessly (e.g., by using infrared wave, wireless wave, or microwave). The computer-readable storage medium may be any usable medium to which the computer has access or a data storage device such as a server and a data center integrated by one or more usable mediums. The usable medium may be a magnetic medium (e.g., floppy disk, hard disk, and tape), an optical medium (e.g., a high-density digital video disc (DVD)), or a semiconductor medium (e.g., a solid state disk (SSD)).

Those skilled in the art understand that "first", "second", and other various numerical numbers involved in the disclosure are only described for the convenience of differentiation, and are not used to limit the scope of the embodiments of the disclosure, or indicate the order of precedence.

The term "at least one" in the disclosure may also be described as one or more, and the term "a plurality of" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

The correspondences shown in the tables in this disclosure may be configured or may be predefined. The values of information in the tables are merely examples and may be configured to other values, which are not limited by the disclosure. In configuring the correspondence between the information and the parameter, it is not necessarily required that all the correspondences illustrated in the tables must be configured. For example, the correspondences illustrated in certain rows in the tables in this disclosure may not be configured. For another example, the above tables may be adjusted appropriately, such as splitting, combining, and the like. The names of the parameters shown in the titles of the above tables may be other names that may be understood by the communication apparatus, and the values or representations of the parameters may be other values or representations that may be understood by the communication apparatus. Each of the above tables may also be implemented with other data structures, such as, arrays, queues, containers, stacks, linear tables, pointers, chained lists, trees, graphs, structures, classes, heaps, and Hash tables.

The term "predefine" in this disclosure may be understood as define, define in advance, store, pre-store, pre-negotiate, pre-configure, solidify, or pre-fire.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above may be referred to the corresponding processes in the preceding method embodiments, and will not be repeated herein.

The above are only specific implementations of the disclosure, but the scope of protection of the disclosure is not limited thereto. Those skilled in the art familiar to this technical field can easily think of changes or substitutions in the technical scope disclosed by the disclosure, which shall be covered by the scope of protection of the disclosure. Therefore, the scope of protection of the disclosure shall be governed by the scope of protection of the appended claims.

## Claims

1. An access control method, performed by a remote terminal device, comprising:
in response to the remote terminal device performing a relay selection during running of an access barring timer, determining a satisfaction situation of a specified condition; and
controlling a running state of the access barring timer according to the satisfaction situation of the specified condition.

2. The method of claim 1, wherein the specified condition comprises at least one of: a condition where a trigger event of the relay selection is a specified event, or a condition where a serving cell of the remote terminal device changes.

3. The method of claim 2, wherein the specified event comprises any one or more of:
leaving a connected state, radio link failure, cell handover failure, receiving a radio resource control (RRC) release message, and higher-layer notification.

4. The method of claim 1, wherein controlling the running state of the access barring timer according to the satisfaction situation of the specified condition comprises:
in response to the specified condition being satisfied, stopping the access barring timer; or
in response to the specified condition not being satisfied, keeping the access barring timer running.

5. The method of any one of claims 1-4, wherein the relay selection comprises a relay reselection.

6. A communication apparatus, applied to a remote terminal device, comprising:
a processing module, configured to, in response to the remote terminal device performing a relay selection during running of an access barring timer, determine a satisfaction situation of a specified condition, and control a running state of the access barring timer according to the satisfaction situation of the specified condition.

7. The communication apparatus of claim 6, wherein the specified condition comprises at least one of: a condition where a trigger event of the relay selection is a specified event, or a condition where a serving cell of the remote terminal device changes.

8. The communication apparatus of claim 7, wherein the specified event comprises any one or more of:
leaving a connected state, radio link failure, cell handover failure, receiving a radio resource control (RRC) release message, and higher-layer notification.

9. The communication apparatus of claim 6, wherein the processing module is further configured to:
in response to the specified condition being satisfied, stop the access barring timer; or
in response to the specified condition not being satisfied, keep the access barring timer running.

10. The communication apparatus of any one of claims 6-9, wherein the relay selection comprises a relay reselection.

11. A communication apparatus, comprising a processor and a memory having a computer program stored therein, wherein when the processor executes the computer program stored in the memory, the apparatus is caused to implement the method of any one of claims 1-5.

12. A computer readable storage medium for storing instructions, wherein when the instructions are executed, the method of any one of claims 1-5 is implemented.
